(19) Europäisches Patentamt
European Patent Office
Office européen des brevets

(11) **EP 1 659 423 B1**

(12) **EUROPEAN PATENT SPECIFICATION**

(45) Date of publication and mention
of the grant of the patent:
**26.01.2011 Bulletin 2011/04**

(51) Int Cl.:
*G02B 1/11* (2006.01)    *C03C 17/00* (2006.01)
*C03C 14/00* (2006.01)

(21) Application number: **05017621.3**

(22) Date of filing: **12.08.2005**

(54) **Anti-reflecting membranes, a method for producing the membranes and their use for optical members display apparatus, optical storage media and solar energy converting devices**

Entspiegelungsschicht, Herstellungsverfahren und Verwendung für optische Anzeigevorrichtungen, Optische Speichermedien und Vorrichtungen zum Sonnenenergiekonversion

Couche antiréflechissante, méthode de fabrication et utilisation d'une telle couche pour des élements optiques d'affichages, des supports de stockage optique et des dispositifs de conversion d'énergie solaire

(84) Designated Contracting States:
**DE FR GB**

(30) Priority: **18.11.2004 JP 2004333838**

(43) Date of publication of application:
**24.05.2006 Bulletin 2006/21**

(60) Divisional application:
**10173463.0 / 2 259 097**

(73) Proprietor: **Hitachi, Ltd.**
**Tokyo (JP)**

(72) Inventors:
• **Sasaki, Hiroshi**
**c/o Hitachi, Ltd.**
**Chiyoda-ku**
**Tokyo 100-8220 (JP)**
• **Tomioka, Yasushi**
**c/o Hitachi, Ltd.**
**Chiyoda-ku**
**Tokyo 100-8220 (JP)**
• **Adachi, Masaya**
**c/o Hitachi, Ltd.**
**Chiyoda-ku**
**Tokyo 100-8220 (JP)**
• **Sugibayashi, Makiko**
**c/o Hitachi, Ltd.**
**Chiyoda-ku**
**Tokyo 100-8220 (JP)**
• **Hiyama, Ikuo**
**c/o Hitachi, Ltd.**
**Chiyoda-ku**
**Tokyo 100-8220 (JP)**
• **Kondou, Katsumi**
**c/o Hitachi, Ltd.**
**Chiyoda-ku**
**Tokyo 100-8220 (JP)**

(74) Representative: **Beetz & Partner**
**Patentanwälte**
**Steinsdorfstrasse 10**
**80538 München (DE)**

(56) References cited:
JP-A- 2005 249 982    US-A- 4 374 158
US-A- 4 816 333    US-B1- 6 383 559

• **PATENT ABSTRACTS OF JAPAN vol. 2000, no. 24, 11 May 2001 (2001-05-11) & JP 2001 188104 A (FUJI PHOTO FILM CO LTD), 10 July 2001 (2001-07-10)**

**Description**

Field of the Invention

The present invention relates to anti-reflection membranes formed on a plate, various products using the same, optical members provided with the anti-reflection membrane, and various display apparatus, e.g., personal computers, TV sets, cellular phones and PDAs, provided with the anti-reflection membrane on the outermost surface.

Background of the Invention

When a display apparatus works in a condition of high light intensity, e.g., under bright illumination or in the open air, outside light is reflected by the surface to cause reflection of ambient objects in the display screen. This tends to make the image hard to watch, in particular dark portions of low light intensity. Various attempts have been made to solve these problems, e.g., by coating the display screen with an anti-reflection membrane to reduce light reflection by interference, or roughening the screen's outermost surface to reduce regular reflection intensity by scattering.
However, a roughened surface causes light scattering, which makes the image slightly vague. A display screen not surface-roughened tends to show a clearer image, e.g. for personal computers which frequently display letters and a TV sets which frequently show pictures. Plates on monitor surfaces are generally made of transparent materials, e.g., of glass (refractive index 1.5 to 1.54), acrylic resin (refractive index 1.49) and polyethylene terephthalate resin (refractive index 1.56).
The reflectance R of these members is given by the following equation (1):

$$R = \{(n_1 - n_0)/(n_1 + n_0)\}^2 \qquad (1)$$

wherein:

$n_0$: refractive index of air
$n_1$: refractive index of the member.

Equation (1) can be reduced to equation (2), knowing that the refractive index of air no is generally 1.0:

$$R = \{(n_1 - 1)/(n_1 + 1)\}^2 \qquad (2)$$

A transparent member of glass, acrylic resin or PET resin has a reflectance of 3.9 to 4.0, 3.9 or 4.8%, found by substituting $n_1$ in equation (2) by the refractive index of each material. A member coated with a single-layer anti-reflection membrane of adequate thickness to reduce the reflectance has a reflectance R' given by equation (3):

$$R' = \{(n_2^2 - n_0 \times n_1)/(n_2^2 + n_0 \times n_1)\}^2 \qquad (3)$$

wherein:

$n_0$: refractive index of air
$n_1$: refractive index of the outermost surface plate
$n_2$: refractive index of the anti-reflection membrane.

Equation (3) can be reduced to equation (4), knowing that the refractive index of air no is generally 1.0:

$$R' = \{(n_2^2 - n_1)/(n_2^2 + n_1)\}^2 \qquad (4)$$

The reflectance R' should be theoretically zero, when $n_2^2 = n_1$ (or $n_2 \sqrt{n_1}$).

This means that a suitable refractive index of an anti-reflection membrane on glass is around 1.22. It is however very difficult to secure a sufficiently low refractive index by a single-layer membrane, because even a fluorinated resin and magnesium fluoride have a respective refractive index of around 1.34 and 1.38, the former being known as a material of relatively low refractive index and the latter as an inorganic material of particularly low refractive index.

Recently, methods for decreasing the refractive index of a single-layer membrane have been proposed. For example, JP-A 2003-201443 (Patent Document 1) proposes a thin membrane of aerogel. It is composed of fine particles having pores inside (fine hollow particles) and a binder for supporting the fine hollow particles. The inside pores have refractive index which in substantially the same as that of air (refractive index: 1.0), with the result that the membrane as a whole has a refractive index close to that of air even when the fine hollow particles or the binder have a high refractive index. In other words, the member can have a reduced refractive index by forming this membrane on a plate.

JP-A 7-92305 (Patent Document 2) proposes another method for decreasing the refractive index of a single-layer membrane without using aerogel. It is composed of superfine organic particles having surfaces exposed in the area near air and roughened, to decrease the surface density and thereby to decrease the membrane refractive index.

JP-A 2004-83307 (Patent Document 3) proposes still another method for providing a low-refractive-index membrane having pores of honeycomb structure. These pores are designed to pass through fine silica particles and run in parallel to each other, in order to maximize the void fraction without deteriorating the strength of the fine silica particles. It claims that a low-refractive-index membrane of high strength can be produced.

US 6 383 559 B1 discloses anti-reflection films comprising a low refractive index layer. The low refractive index layer comprises a polymeric binder and microparticles, inter alia of silicon dioxide, which are close-packed. The microvoids reducing the refractive index of the anti-reflection films are no pores formed in the binder, but are the interstices between the close-packed silicon dioxide particles, which have concave faces. The particles may have a core-shell structure.

The method of US 6 383 559 B1 for forming microvoids consists in spreading a coating material on a support and drying without formation of bubbles, but with closing the interstices between the packed particles with a polymerizing binder.

The preambles of the independent claims reflect that prior art.

Brief Summary of the Invention

The thin aerogel membrane proposed by Patent Document 1 involves problems resulting from the low mechanical strength due to its high void fraction. The physical strength of the membrane greatly depends on that of the fine hollow particles. Decreasing the refractive index of the fine hollow particles needs increasing their void fraction, and it is difficult to increase the physical strength of the thin aerogel membrane comprising the fine hollow particles of decreased shell thickness.

Increasing the void fraction of these particles while increasing their thickness is not practical, because this is accompanied by increased particle size, and particles of increased size tend to scatter visible light and decrease their transmittance. Moreover, the manufacturing method uses carbon dioxide in supercritical state, which causes special production-related problems.

The low-refractive-index membranes proposed by Patent Documents 2 and 3, the latter having pores of honeycomb structure, are considered to have a high mechanical strength, because they are produced by crosslinking or polymerization. However, they have irregularities on the surface, which may catch dust which increases the refractive index. Moreover, they have a refractive index of around 1.3 to 1.4, which is higher than the ideal level of 1.2.

The present invention has been developed to solve these problems. The underlying problems of the present invention are to provide an anti-reflection membrane on a plate, i.e. a corresponding laminate, which simultaneously satisfies the requirements of high anti-reflection capacity and physical strength, to provide a method for manufacturing these laminates, and the use of the laminates in and display apparatus.

The above problems are solved according to the teachings of the independent claims.

The dependent claims relate to preferred embodiments of the concept of the present invention.

The laminate of the present invention comprises

a plate which transmits visible light

and

at least one anti-reflection membrane formed on at least one side of the plate and comprising

- fine particles of silicon oxide,
- a binder made of an organic polymer material, and
- fine pores;

it is **characterized in that**

- the fine silicon oxide particles have hydroxyl groups on the surface,
- the pore size of the fine pores is 5 to 200 nm, and
- the anti-reflection membrane has a surface electrical resistance of $10^{10}$ to $10^{11}$ $\Omega$.

The method of the present invention for forming laminates comprising
a plate which transmits visible light
and
at least one anti-reflection membrane formed on at least one side of the plate and comprising

- fine particles of silicon oxide,
- a binder made of an organic polymer material,
  and
- fine pores
  comprises the steps of
- providing a coating material composed of fine silicon oxide particles, an organic polymerizable material forming a binder, and a solvent,
  and
- spreading the coating material on a plate which transmits visible light to form a coating film thereon and drying, with formation of microvoids;
  the method is **characterized in that**
- fine silicon oxide particles are used having hydroxyl groups on the surface,
  and
- the microvoids are formed by

  - heating the coating material of the coating film for evaporating the solvent to form bubbles in the coating material
    and
  - cooling the coating material to hold the bubbles as pores forming the microvoids in the resulting anti-reflection membrane having a pore size of 5 to 200 nm and a surface electrical resistance of $10^{10}$ to $10^{11}$ $\Omega$.

The invention further relates to the use of the laminates comprising the above-defined anti-reflection membranes in or for manufacturing

- optical storage media,
- optical members, particularly optical discs,
- liquid crystal display panels,
- display apparatus, particularly monitors,
- optical storage media working based on a different reflectance of light at recording sections than at non-recording sections,
- window panes,
- greenhouse panes,
- windshield panes,
- mobile display devices,
- rear-view mirrors for automobiles,
- aquarium, herbarium and terrarium walls,
- solar cell panels.

The inventors of the present invention have developed, after having extensively studied various membrane materials and membrane-forming methods, a method for providing pores of 5 to 200 nm within a binder comprising fine inorganic silicon oxide particles. The membrane of the laminates of the invention is found to show a lower refractive index than the binder and, at the same time, a high physical strength in spite of the pores present in the membrane, because the fine silicon oxide particles which it comprises are solid.

The pores are not evenly distributed within the membrane, but more heavily distributed in the vicinity of the anti-reflection membrane surface than on the plate surface. This structure is found to exhibit its inherent anti-reflection capacity, and over a wide wavelength range, even when its thickness changes to some extent.

Moreover, the membrane is found to bring the effect of preventing deposition of dust or the like thereon even under low-moisture conditions in winter, because of its very low surface resistance.

The laminates of the present invention can be used particularly in or for manufacturing of the following devices: display apparatus having an anti-reflection membrane on the outermost surface of the display section; optical storage media working based on differential reflectance of light at the recording section, wherein the anti-reflection membrane is provided on the outermost surface;

greenhouses having at least one transparent wall, wherein the wall is provided with a laminated anti-reflection membrane;

mobile display devices having an inputting section and a display screen, wherein the display screen comprises a transparent plate coated with the anti-reflection membrane;

solar energy converting devices comprising an insulating transparent plate, a surface electrode, a photon-electron converter, a middle transparent electrode and a bottom electrode, wherein the insulating transparent plate is coated with the anti-reflection membrane;

transparent plates for building interior materials, wherein the plate is provided with the anti-reflection membrane;

liquid-crystal display panels comprising a pair of plates, a liquid-crystal layer placed between the pair of plates, electrodes for applying charges on the liquid-crystal layer, a polarizing plate provided on at least one of the pair of plates, and the above-described anti-reflection membrane; display panels comprising a pair of plates, a fluorescent member placed between the pair of plates, electrodes on at least one side of the plate in contact with the fluorescent member, and the above-described anti-reflection membrane; the above-described liquid-crystal display panels, wherein a transparent plate is formed on the polarizing plate via an air layer, and the above-described anti-reflection membrane is formed on at least one side of the polarizing plate or transparent plate; the above-described liquid-crystal display panels, wherein a transparent plate is formed on the polarizing plate via an organic layer, and the above-described anti-reflection membrane is formed on at least one side of the polarizing plate or transparent plate;

the above-described display apparatus, wherein the display panel surface member, transparent plate and organic layer satisfy the following inequalities:

$$|n_1 - n_0| \leq 0.2 \text{ and } |n_2 - n_0| \leq 0.2$$

wherein:

$n_0$: refractive index of the display panel surface member
$n_1$: refractive index of the transparent plate
$n_2$: refractive index of the organic layer;

display apparatus comprising a light source and the above-described liquid-crystal display panel for controlling light emitted from the light source to display an image;

the above-described display apparatus, wherein the light source is partly or totally composed of an LED, and the transparent plate is made of an organic resin;

the above-described display apparatus, wherein the light source is coated with the above-described anti-reflection membrane;

the above-described display apparatus, wherein at least one member having an interface with air is provided between the light source and liquid-crystal display panel, the member being coated with the above-described anti-reflection membrane at least on one side;

the above-described display apparatus, wherein the member is selected from the group consisting of a diffusion plate, a diffusion sheet, a film having a prism structure on the surface, an optical waveguide, a polarizing plate reflecting certain polarized light and a polarizing plate absorbing certain polarized light,

optical members comprising the above-described anti-reflecting membrane laminate.

According to a preferred embodiment, the anti-reflection membrane of the laminate has an arithmetic average surface roughness (Ra) below 6 nm on one side.

According fo another preferred embodiment of the laminates, the binder of the anti-reflection membrane is mainly composed of the same material as that for the plate.

According to still another embodiment of the present invention, the pores of the anti-reflection membrane have a major axis of 5 to 200 nm. According to a further preferred embodiment of the laminates the anti-reflection membrane has a lower refractive index than the plate. In accordance with still another preferred embodiment of the present invention the fine particles of the anti-reflection membrane have a major axis of 190 nm or less and a minor axis shorter than the thickness of the membrane.

Other objects, features and advantages of the invention will become apparent from the following description of the embodiments of the invention taken in conjunction with the accompanying drawings.

Brief Description of the Drawings

Fig. 1 outlines one example of the method for forming the laminates of the present invention.

Fig. 2 is a photograph showing a cross-section of an anti-reflection membrane formed on an acrylic resin plate.

Fig. 3 is a photograph showing a cross-section of a laminate with the anti-reflection membrane.

Fig. 4 shows the relationship between reflectance and thickness of the anti-reflection membrane of the laminates of the present invention.

Description of Reference Numerals

1     Plate

2     Coating solution

3     Bubbles

4     Pores

5     Anti-reflection membrane

115   Pores

116   Anti-reflection membrane

Detailed Description of the Invention

The embodiments and Examples of the present invention are described by referring to the attached drawings, which by no means limit the present invention, and variations may be made without departing from the scope of the claims.

The anti-reflection membrane of the laminates of the present invention is composed of fine silicon oxide particles and a binder. The membrane is produced basically by spreading a mixture comprising the fine silicon oxide particles, a binder and a solvent on a plate and then heating it into a film. When the binder is of a thermosetting material or a monomer for an epoxy or melamine resin, it is incorporated with a small quantity of catalyst to accelerate thermosetting of the membrane. The anti-reflection membrane may be formed by a process for forming a single-layer or multi-layer membrane.

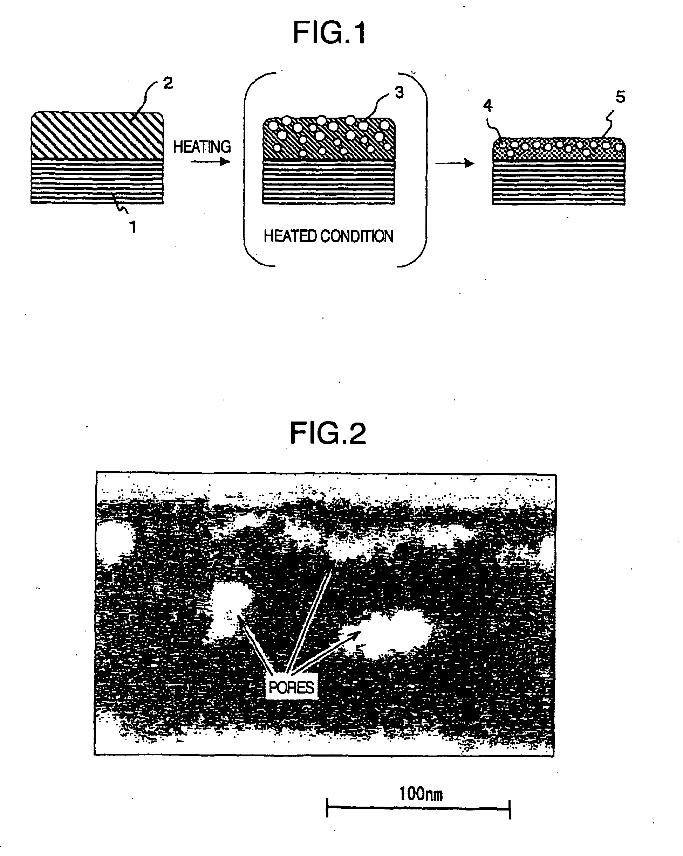

The method for forming the anti-reflection membrane is outlined by referring to Fig. 1. First, the plate 1 is coated with the coating solution 2 to form a coating film. Then, it is heated. This evaporates the solvent to leave the bubbles 3 in the film. These bubbles are held as the pores 4 in the film, after it is cooled, to form the anti-reflection membrane 5 of the laminates of the present invention.

The formation of the pores can be controlled by selecting a solvent of adequate boiling point and thermosetting treatment temperature, knowing that the evaporation of the solvent in the membrane during the thermosetting step contributes to the formation of the pores.

The pores are formed more densely in the vicinity of the outermost surface of the membrane. This conceivably results from the pores, which start to appear within the coating solution on the plate as it is heated for thermosetting, rising up to the surface area.

Lamination of two or more membranes can be selected to massively form the pores also inside as well as in the surface area. This also contributes to increased membrane strength.

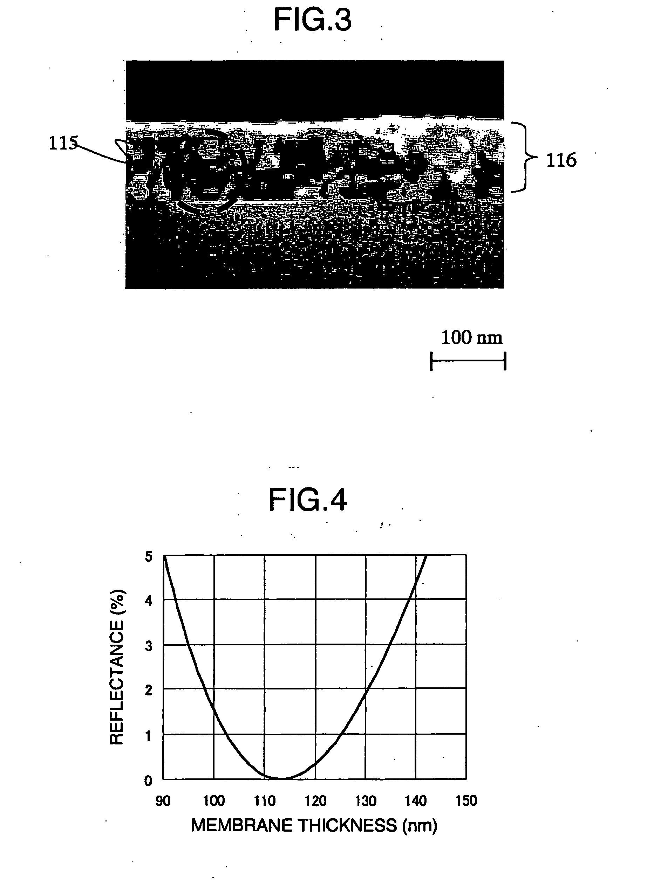

Fig.3 presents a cross-sectional view (photograph) of this membrane. The photograph shows the pores 115 distributed inside of the anti-reflection membrane 116 but to a lesser extent on the surface. The surface on which the pores are distributed massively becomes rougher with larger irregularities, which tend to be wiped out when the surface is cleaned with a cloth or the like. These problems are reduced when the surface has smaller irregularities, to result in improved physical strength of the membrane.

Next, the coating solution and the film-making process are described in detail.

(1) Coating solution

The coating solution is composed of a binder, fine silicon oxide particles and solvent. Each of these constituents is described below.

(1-1) Binder

A binder for coating solutions may be selected from highly transparent, organic high-molecular-weight materials, and materials polymerizable to have a high molecular weight. Organic high-molecular-weight materials include thermoplastic ones. More specifically, they include acrylic resins, polystyrene, styrene/acrylic copolymers, polyester resins, polyvinyl chloride, ethylene/vinyl acetate copolymers, polyethylene terephthalate resins, polyvinylidene chloride and polycarbonate resins. Organic materials polymerizable to have a high molecular weight include thermosetting ones. More specifically, they include polyamic acid derivatives having an aliphatic structure. .

(1-2) Fine inorganic oxide particles

The fine particles for the present invention are colorless or white fine particles of silicon oxide. When they are spherical, they preferably have an average particle size of 190 nm or less to prevent scattering of visible light entering the membrane. For the behavior of particles in visible light, see "Industrial Science of Color", Yoshinobu Naya, 2nd edition, published by Asakura Shoten, February 10, 1984, page 2. Larger particles may not be suitable for displays, because of possible scattering of incident light to make the membrane cloudy. When they are linear in shape, they have preferably a thickness (thickness of the cross-section perpendicular to the longitudinal direction) of 190 nm for the same reason as the above. The lower limit size of the primary particles is not limited, so long as they are well dispersed in the membrane.

Two or more types of fine silicon oxide particles of different size or shape may be used.

Colloidal silica is suitable for the fine silicon oxide particles. The colloidal silica products include organosilica sol, e.g., Snowtex (Nissan Chemical Industries). These fine particles have hydroxyl groups massively on the surface, and are highly hydrophilic. Moreover, an anti-reflection membrane containing these particles is hydrophilic and, at the same time, has a very low electrical resistance of $1\times10^{10}$ to $1\times10^{11}$ $\Omega$ This level is much lower than that of glass, or acrylic, polycarbonate or PET resin, of the order of 1/10,000 to 1/1,000,000. Therefore, the membrane efficiently prevents deposition of dust or the like thereon, making itself applicable to widely varying devices. For example, a greenhouse or the like provided with the laminated anti-reflection membrane on a transparent surface is blessed with more incident light, leading to faster plant growth. An image-forming device can display clean images for extended periods, even when placed in a room of low moisture. A transparent plate coated with the anti-reflection membrane is suitable for building interior materials, e.g., clean room walls and partitions.

(1-3) Solvent

An effective solvent for the coating solution dissolves or evenly disperses the binder therein. An alcohol-based solvent is suitable for the coating solution. More specifically, the alcohol-based solvents useful for the present invention include ethanol, n-propanol, iso-propanol, n-butanol, isobutanol, tert-butanol, n-pentanol, iso-pentanol and tert-pentanol. An alcohol-based solvent is suitable, because it does not easily swell, deform or dissolve a resin plate of, e.g., polycarbonate or acryl. It tends to have a higher boiling point as its carbon number increases, and a lower boiling point as it is more branched.

(2) Film-making method

The low-refractive-index membrane of the laminates of the present invention is formed by pre-treating a plate, spreading a coating solution to form a film thereon and heating the film. It may be formed by a process for forming a single-layer or multi-layer membrane. Moreover, the heating step may be followed by post-treatment to improve wear-resistance of the membrane. These steps are described below in detail.

(2-1) Pre-treatment

In the pre-treatment step, the plate is cleaned to improve its wettability. This is to evenly deposit a coating solution on the plate.

(i) Plate cleaning

In the plate cleaning step, a solvent, detergent or the like which well dissolves dirt on the plate or removes it from the plate is used. When the plate is made of a resin, e.g., an acrylic or polycarbonate resin, an alcohol-based solvent, e.g., methanol, ethanol, propanol or butanol, is more preferable than a solvent such as tetrahydrofuran or dioxane, which dissolves the surface to make it cloudy. When the plate is made of glass, immersing the plate in a basic solution (e.g., an aqueous sodium hydroxide solution) to slightly etch the surface can remove dirt along the way.

(ii) Improvement of plate wettability

Improving the plate wettability allows a coating solution to be more evenly spread on the surface, reducing film thickness fluctuations and improving the optical properties of the membrane on the plate. It also enhances adhesion of the membrane to the plate, leading to improved membrane strength. The wettability of the plate can be improved by surface modification with the aid of an adequate device, e.g., a plasma irradiator, or chemical modification with an acidic or basic solution or the like.

• Surface modification with the aid of a device

The methods falling into this category include oxygen plasma irradiation, exposing to an ozone atmosphere and UV irradiation. Each method depends on active oxygen acting on the plate surface to form hydroxyl or carboxyl group or the like. These groups are hydrophilic, and the surfaces on which they are formed will have improved wettability. UV irradiation excites oxygen in air into an active state for surface modification. Therefore, it brings an effect similar to that by oxygen plasma irradiation or exposure to an ozone atmosphere. Argon plasma irradiation can be also used for the surface modification.

• Chemical modification

Glass has improved wettability when immersed in an aqueous sodium hydroxide solution, because silicon-oxygen bonds on the surface are broken to form hydroxy groups.

(2-2) Coating method

The methods for coating the plate include, but are not limited to, spin coating, dip coating, bar coating, coating by an applicator, spray coating and flow coating. In order to control the membrane to an adequate thickness, it is necessary to select a correct coating solution concentration and conditions for an individual coating method. The conditions which affect the membrane thickness are rotating speed and time for spin coating, dipping time and withdrawing speed for dip coating, depth of the groove on the surface of the bar for bar coating, gap size for coating by an applicator, spray moving speed for spray coating, and the angle at which the plate is kept and the quantity of coating solution used for flow coating.

It is preferable to set the target membrane thickness at 60 to 190 nm. Theoretically, the reflectance attains a minimum at a membrane thickness t tantamount to $\lambda/4n$, wherein $\lambda$ is the wavelength of incident light, and n is the refractive index of a medium into which the incident light enters and through which it passes (transparent plate, or anti-reflection membrane).

When the incident light is visible light (wavelength: 380 to 760 nm) and a material having a refractive index in a range from that of air (refractive index: around 1.0) as a medium to that of a transparent glass plate of a relatively high refractive index (around 1.7) is used, the desirable minimum membrane thickness is 380/(4x1.7) = 56 nm. A membrane thickness below 56 nm may not sufficiently affect reflectance when incident light has a wavelength in the visible range. It is preferable to set the target minimum thickness at 60 nm, which is slightly larger than 56 nm, in consideration of the membrane thickness distribution occurring in the actual production process. On the other hand, the desirable maximum membrane thickness is 760/(4x1.0) = 190 nm. Based on the above considerations, the thickness of the membrane of the present invention is preferably in a range from 60 to 190 nm. The luminosity factor varies between individuals. The wavelength ($\lambda$) at which the relative spectral responsivity attains a maximum in the photopic relative luminosity curve ("Industrial Science of Color", Yoshinobu Naya, 2nd edition, published by Asakura Shoten, February 10, 1984, pages 4 to 8) is around 555 nm. In other words, the wavelength at which men's luminosity factor attains a maximum is around 555 nm in a bright ambience. The refractive index of an anti-reflecting membrane theoretically decreasing the reflectance to 0% depends on the refractive index of the plate on which the membrane is formed, because it is the square root of that of the plate. Materials for plates applied to display apparatuses, e.g., monitors, include glass, acrylic and PET resins.

The anti-reflection membrane preferably has a refractive index of 1.22 to 1.24 when formed on a glass plate

(refractive index: 1.50 to 1.54), a refractive index of 1.22 when formed on an acrylic resin plate (1.49), and a refractive index of 1.25 when formed on a PET resin plate (1.56). Based on the above considerations, an anti-reflection membrane can theoretically decrease reflection of light to 0%, when it is formed on a plate having a refractive index of 1.5 and the light has a wavelength of 555 nm. An uncoated plate has a reflectance of around 4% on one side, and an anti-reflection membrane thickness which can decrease reflectance to 4% or less is in a range of 90 to 140 nm. Fig. 4 illustrates the relationship between reflectance and membrane thickness under the above conditions.

### (2-3) Heating

The coated plate is heated to remove the solvent by evaporation, or to accelerate the polymerization. When a thermosetting resin is used as the binder, the heating should be carried out at the thermosetting temperature of the resin or higher. It is therefore necessary to select the solvent, and the plate materials to satisfy these requirements. The plate is preferably made of a material similar to that for the membrane.

One of the principles used according to the present invention for forming the pores in the membranes is based on micropore formation during the evaporation of the solvent during the thermosetting of the binder or other reactions of the binder and the silicon oxide particle system, such as phase transitions, e.g. when a silica sol is converted into silicon oxide.

The anti-reflection membrane is produced, when it is thermally set.

### (3) Application areas

The anti-reflection membrane can be formed on a transparent plate, e.g., that of glass, or polycarbonate or an acrylic resin.

Therefore, the laminates are useful for those areas where it is required to efficiently take in sunlight while minimizing reflection. These areas include transparent walls for greenhouses to stably and rapidly grow plants, and transparent walls for aquariums, because the can efficiently control reflection and enhance visibility of animals, plants, insects, fishes or the like to be observed or viewed.

Similarly, they are applicable to display apparatus, e.g., liquid-crystal, plasma and organic electroluminescent (organic EL) displays, which are used for TV sets, cellular phones, car navigation systems, tachometers and the like, because the laminates can control the reflection of light and thereby enhance the visibility. It is suitable to place them on the outermost surface of the display screen of these apparatus.

The laminates with the anti-reflection membrane are also applicable to the coating of solar cell panel surfaces to enhance solar energy conversion efficiency. Still more, they are also applicable to the outermost surface of optical storage media, because they can efficiently take in not only sunlight but also laser beams or the like.

The anti-reflection membrane is characterized by its low electrical surface resistance to prevent deposition or the like thereon, in addition to its high anti-reflection capacity, and can keep high light transmittance and visibility even when used in a low-moisture atmosphere in winter or a dusty atmosphere.

### (i) Controlling reflection

The anti-reflection membrane of the laminates of the present invention can keep its transparency even when formed on a transparent plate, e.g., that of glass, or polycarbonate or an acrylic resin. It is therefore applicable to display apparatuses, e.g., liquid-crystal, plasma and organic electroluminescent (organic EL) displays, which are used for TV sets, cellular phones, car navigation systems, tachometers and the like. It is also applicable to lenses, vehicle widows, and outermost members for vehicle illuminators and light-emitting elements.

### (ii) Controlling reflection of external and/or internal light for display apparatuses

The laminate of the present invention comprising the anti-reflecting membrane is located between a light source and the outermost surface of an outermost plate surface, and can control the reflection of light within a display apparatus, when at leat one membrane plane has an interface with air. It also can control the reflection of external light, when formed on an outermost surface. It is applicable to any membrane/member combination, so long as the member has an interface between its surface and air. It may have a lower physical strength when formed on a surface other than an outermost surface so long as it satisfies an objective capacity for controlling the reflection of light.

In a plasma display provided with a front filter facing the light exit side of a front plate via an air layer the reflection of external and internal light can be controlled when provided with anti-reflection membrane on the light exit and/or the light inlet and/or the front glass surfaces. In a display apparatus lacking an inside member having an interface with an air layer, e.g., that having no air layer between a front plate and front filter or having no front filter, the reflection of external light can le controlled when provided with the anti-reflection membrane on the outermost surface.

In a liquid-crystal display with a polarizing plate not bonded to any of a pair of transparent plates between which a liquid-crystal layer is placed, the reflection of internal light can le controlled when provided with the anti-reflection membrane on a polarizing plate or a transparent plate having an interface with an air layer.

(iii) Improving brightness

A member constituting a back-light unit can have improved brightness when provided with the anti-reflecting membrane on one or both sides partly or totally, depending on its purposes, to enhance light transmittance. It is applicable to any membrane/member combination, so long as the member has an interface between its surface and air. A display which has a light source beside a panel and directs light to a target area by an optical waveguide, e.g., a small-to intermediate liquid-crystal display, can have improved brightness when provided with the anti-reflection membrane on the waveguide. It can also have improved brightness when provided with the anti-reflection membrane on the light source.

Examples

The present invention is described in detail by way of an Example. However, it is to be understood that the example is by no means limiting.

Example

An anti-reflecting membrane forming solution was prepared as follows.

First, the method for forming the anti-reflection membrane on a glass plate is described.

(1) Pre-treatment of plate before it is coated with a solution for forming the anti-reflection membrane

A glass plate (100 by 100 by 1.1mm in size, refractive index: 1.50) was irradiated with ultraviolet rays, 10mW in intensity, emitted from a low-voltage mercury lamp for 5 minutes. This decreased the contact angle of the plate surface with water from 30 to 35° to 10° or less.

(2) Preparation of solution for forming the anti-reflection membrane

A coating solution for forming the anti-reflection membrane (hereinafter referred to as anti-reflection membrane forming solution) was prepared by mixing 0.15 parts by weight of an acrylic resin emulsion (ititachi chemical HITAROIDE, SW6011, solids content 50%) for the binder and 4 parts by weight of Snowtex C (Nissan Chemical Industries, solids content 20%) for the fine silicon oxide particles with 60 parts by weight of water. It had a boiling point of 100 °C.

(3) Spreading the anti-reflection membrane forming solution

The anti-reflection membrane forming solution was spread on the glass plate pre-treated in the step (1) by spin coating at 350rpm for first 5 seconds and then at 1200rpm for 20 seconds. Visual observation indicated that it was spread almost evenly.

(4) Heating

The coated plate was swiftly put in a constant-temperature bath kept at 120°C inside, and heated therein for 10 minutes, thus producing the anti-reflection membrane formed on the glass plate.

(5) Treatment of the back side

The coated plate was subjected to the above steps (1), (3) and (4) after it was.turned over, to coat the back side similarly with the anti-reflection membrane.

(6) Evaluation test results

The anti-reflection membrane formed on each side of the glass plate had a thickness of 90 nm (average thickness of the membrane as a whole) and a refractive index of 1.320, as determined with an ellipsometer (Mizoziri Kogaku Kogyo, DHA-OLK). The glass plate coated with the anti-reflection membrane on each side had a reflectance of 2.9% versus 8% of the uncoated plate at a wavelength of 555 nm, at which men's luminosity factor attains a maximum, confirming that the membrane exhibited the anti-reflection capacity.

Pores of 5 to 80 nm in size were found in the cross-section of the anti-reflection membrane by The, as shown in Fig. 2.

Therefore, Example 1 produced a membrane having a refractive index close to that of the solid membrane on the plate side and to that of air on the surface side. It is therefore considered that that the membrane prevents reflection of light at each interface with the plate or air, because of decreased differential refractive index between the dissimilar materials with the interface in-between.

The anti-reflecting membrane had a surface resistance of $8 \times 10^{10} \Omega$ at 20°C and a relative humidity of 50%, determined in accordance with ASTM D-257.

It is thus demonstrated in Example 1 that an organic high-molecular-weight material, e.g., an acrylic resin, is useful as the binder for the anti-reflection membrane forming solution.

The membrane has a lower electrical resistance than a glass plate which brings the advantage of preventing deposition of dust or the like thereon, because it is charged to a lesser extent.

The low-refractive-index membrane containing a number of fine pores may be improved physical strength.

It should be understood by those skilled in the art that although the foregoing description has been made on embodiments of the invention, the invention is not limited thereto and various changes and modifications may be made without departing from the scope of the appended claims.

Advantages of the Invention

The present invention provides single-layer anti-reflection membranes having a very low refractive index and high anti-reflecting capacity by a simple procedure of spreading and thermally setting a coating solution. Optical devices and.members, e.g., display apparatus and DVD disks, can reproduce records at a high sensitivity while controlling the reflection of ambient objects in the display screen, when provided with the laminated anti-reflection membrane. It is found that the laminated anti-reflection membrane can bring effects of controlling the reflection of ambient objects in the display screen and enhancing the impact resistance for a liquid-crystal display, which is low in impact resistance because a polarizing plate works as the display screen, when the outermost surface is covered with a transparent plate (of acrylic resin, glass or the like) coated with the anti-reflection membrane.

It is also found that the anti-reflection membranes allow an efficient utilization of sunlight because of the greatly controlled reflection, and are applicable to solar energy converting devices and greenhouses comprising a member coated therewith to accelerate the growth of plants.

It is also found that the anti-reflection membrane is applicable to building interior materials, because it is sufficiently low in the electrical surface resistance to give highly anti-fouling plates.

**Claims**

1.  Laminate, comprising
    a plate (1) which transmits visible light
    and
    at least one anti-reflection membrane (5) formed on at least one side of the plate (1) and comprising

    - fine particles of silicon oxide,
    - a binder made of an organic polymer material, and
    - fine pores (4),

    **characterized in that**

    - the fine silicon oxide particles have hydroxyl groups on the surface,
    - the pore size of the fine pores (4) is 5 to 200 nm, and
    - the anti-reflection membrane (5) has a surface electrical resistance of $10^{10}$ to $10^{11}$ $\Omega$.

2.  Laminate according to claim 1, **characterized in that** the average particle size of the fine silicon oxide particles of the anti-reflection membrane (5) is $\leq$ 190 nm.

3.  Laminate according to claim 1 or 2, **characterized in that** the thickness of the anti-reflection membrane (5) is 60 to 190 nm.

4. Laminate according to any of claims 1 to 3, **characterized in that** the anti-reflection membrane (5) has a refractive index of 1.22 to 1.25.

5. Laminate according to any of claims 1 to 4, **characterized in that** the pores (4) of the anti-reflection membrane (5) have a major axis of 5 to 200 nm.

6. Laminate according to claim 5, **characterized in that** the silicon oxide particles of the anti-reflection membrane (5) have a major axis of ≤ 190 nm and a minor axis shorter than the thickness of the anti-reflection membrane (5).

7. Laminate according to any of claims 1 to 6, **characterized in that** the binder of the anti-reflection membrane (5) is made of a thermoplastic or a thermosetting organic polymer material.

8. Laminate according to any of claims 1 to 7, **characterized in that** the binder of the anti-reflection membrane (5) is made of an acrylic resin, polystyrene, a styrene/acrylic copolymer, a polyester resin, polyvinyl chloride, an ethylene/vinyl acetate copolymer, a polyethylene terephthalate resin, polyvinylidene chloride, a polycarbonate resin, an epoxy resin and/or a melamine resin.

9. Laminate according to any of claims 1 to 7, **characterized in that** the binder of the anti-reflection membrane (5) is made of an epoxy compound or an epoxy prepolymer or a polyamic acid derivative, preferably a polyamic acid having an aliphatic structure.

10. Laminate according to any of claims 1 to 9, **characterized in that** the anti-reflection membrane (5) on at least one side has an arithmetic average surface roughness (Ra) of ≤ 6 nm.

11. Laminate according to any of claims 1 to 10, **characterized in that** the binder of the anti-reflection membrane (5) is mainly composed of the same material as that of the plate (1).

12. Laminate according to any of claims 1 to 11, **characterized in that** the anti-reflection membrane (5) has or the anti-reflection membranes (5) have a lower refractive index than the plate (1).

13. Laminate according to any of claims 1 to 12, **characterized in that** the plate (1) is made of an acrylic resin or a PET resin.

14. Laminate according to any of claims 1 to 13, **characterized in that** the anti-reflection membrane (5) has a refractive index of

  1.22 to 1.24 when formed on a glass plate, (refractive index 1.50 to 1.54)
  1.22 when formed on an acrylic resin plate (refractive index 1.49) and
  1.25 when formed on a PET resin plate (refractive index 1.56).

15. Method for forming laminates comprising
a plate (1) which transmits visible light
and
at least one anti-reflection membrane (5) formed on at least one side of the plate (1) and comprising

  - fine particles of silicon oxide,
  - a binder made of an organic polymer material, and
  - fine pores (4),

the method comprising the steps of

  - providing a coating material (2) composed of fine silicon oxide particles, an organic polymerizable material forming a binder, and a solvent,
  and
  - spreading the coating material (2) on a plate (1) which transmits visible light to form a coating film thereon and drying,
  with formation of microvoids,

**characterized in that**

- fine silicon oxide particles are used having hydroxyl groups on the surface, and
- the microvoids are formed by

- heating the coating material (2) of the coating film for evaporating the solvent to form bubbles (3) in the coating material (2) and
- cooling the coating material (2) to hold the bubbles (3) as pores (4) forming the microvoids in the resulting anti-reflection membrane (5) having a pore size of 5 to 200 nm and a surface electrical resistance of $10^{10}$ to $10^{11}$ Ω.

16. Method according to claim 15, **characterized in that** the heating of the coating material (2) for evaporating the solvent is carried out at the boiling point of the coating material (2) or higher but at the boiling point plus 150°C or lower.

17. Method according to claim 15 or 16, **characterized in that** a silicon oxide of an average particle size of s 190 nm is used.

18. Method according to any of claims 15 to 17, **characterized in that** the thickness of the anti-reflection membrane (5) is made 60 to 190 nm.

19. Method according to any of claims 15 to 18, **characterized in that** non-spherical silicon oxide particles are used having a major axis of ≤ 190 nm and a minor axis shorter than the thickness of the anti-reflection membrane (5) to be formed.

20. Method according to any of claims 15 to 19, **characterized in that** a plate (1) made of glass, an acrylic resin or a PET resin is used.

21. Use of the laminates comprising anti-reflection membranes (5) according to any of claims 1 to 14 in or for manufacturing

- optical storage media,
- optical members, particularly optical discs,
- liquid crystal display panels,
- display apparatus, particularly monitors,
- optical storage media working based on a different reflectance of light at recording sections than at non-recording sections,
- window panes,
- greenhouse panes,
- windshield panes,
- mobile display devices,
- rear-view mirrors for automobiles,
- aquarium, herbarium and terrarium walls,
- solar cell panels.

**Patentansprüche**

1. Verbundmaterial, das aufweist:

eine Platte (1), die für sichtbares Licht durchlässig ist, und
mindestens eine Antireflexschicht (5), die auf mindestens einer Seite der Platte (1) ausgebildet ist und aufweist:

- feine Partikel aus Siliciumoxid,
- ein Bindemittel, das aus einem organischen Polymermaterial hergestellt ist, und

- feine Poren (4),

**dadurch gekennzeichnet, dass**

- die feinen Partikel aus Siliciumoxid auf der Oberfläche Hydroxylgruppen aufweisen,
- die Porengröße der feinen Poren (4) 5 bis 200 nm beträgt und
- die Antireflexschicht (5) einen elektrischen Oberflächenwiderstand von $10^{10}$ bis $10^{11}$ Ω besitzt.

2. Verbundmaterial nach Anspruch 1, **dadurch gekennzeichnet, dass** die mittlere Teilchengröße der feinen Partikel aus Siliciumoxid der Antireflexschicht (5) ≤ 190 nm beträgt.

3. Verbundmaterial nach Anspruch 1 oder 2, **dadurch gekennzeichnet, dass** die Dicke der Antireflexschicht (5) 60 bis 190 nm beträgt.

4. Verbundmaterial nach einem der Ansprüche 1 bis 3, **dadurch gekennzeichnet, dass** die Antireflexschicht (5) einen Brechungsindex von 1,22 bis 1,25 aufweist.

5. Verbundmaterial nach einem der Ansprüche 1 bis 4, **dadurch gekennzeichnet, dass** die Poren (4) der Antireflexschicht (5) eine größere Achse einer Länge von 5 bis 200 nm aufweisen.

6. Verbundmaterial nach Anspruch 5, **dadurch gekennzeichnet, dass** die Partikel aus Siliciumoxid der Antireflexschicht (5) eine größere Achse einer Länge von ≤ 190 nm und eine kleinere Achse aufweisen, deren Länge kleiner ist als die Dicke der Antireflexschicht (5).

7. Verbundmaterial nach einem der Ansprüche 1 bis 6, **dadurch gekennzeichnet, dass** das Bindemittel der Antireflexschicht (5) aus einem thermoplastischen oder einem wärmehärtenden organischen Polymermaterial hergestellt ist.

8. Verbundmaterial nach einem der Ansprüche 1 bis 6, **dadurch gekennzeichnet, dass** das Bindemittel der Antireflexschicht (5) hergestellt ist aus einem Acrylharz, Polystyrol, einem Styrol-Acryl-Copolymer, einem Polyesterharz, Polyvinylchlorid, einem Ethylen-Vinylacetat-Copolymer, einem Polyethylenterephthalat-Harz, Polyvinylidenchlorid, einem Polycarbonat-Harz, einem Epoxyharz und/oder einem Melaminharz.

9. Verbundmaterial nach einem der Ansprüche 1 bis 7, **dadurch gekennzeichnet, dass** das Bindemittel der Antireflexschicht (5) hergestellt ist aus einer Epoxyverbindung oder einem Epoxy-Präpolymer oder einem Polyamidsäure-Derivat, vorzugsweise einer Polyamidsäure mit einer aliphatischen Struktur.

10. Verbundmaterial nach einem der Ansprüche 1 bis 9, **dadurch gekennzeichnet, dass** die Antireflexschicht (5) auf mindestens einer Seite eine Oberflächenrauhigkeit (Ra) aufweist, die im arithmetischen Mittel ≤ 6 nm beträgt.

11. Verbundmaterial nach einem der Ansprüche 1 bis 10, **dadurch gekennzeichnet, dass** das Bindemittel der Antireflexschicht (5) hauptsächlich aus dem gleichen Material aufgebaut ist, wie es bei der Platte (1) vorliegt.

12. Verbundmaterial nach einem der Ansprüche 1 bis 11, **dadurch gekennzeichnet, dass** die Antireflexschicht (5) oder die Antireflexschichten (5) einen kleineren Brechungsindex als die Platte (1) aufweist/ aufweisen.

13. Verbundmaterial nach einem der Ansprüche 1 bis 12, **dadurch gekennzeichnet, dass** die Platte (1) aus einem Acrylharz oder einem PET-Harz hergestellt ist.

14. Verbundmaterial nach einem der Ansprüche 1 bis 13, **dadurch gekennzeichnet, dass** die Antireflexschicht (5) einen Brechungsindex aufweist von

1,22 bis 1,24 bei Ausbildung auf einer Glasplatte, (Brechungsindex 1,50 bis 1,54)
1,22 bei Ausbildung auf einer Platte aus Acrylharz (Brechungsindex 1,49) und
1,25 bei Ausbildung auf einer Platte aus PET- Harz (Brechungsindex 1,56).

15. Verfahren zur Herstellung von Verbundmaterialien, die aufweisen:

eine Platte (1), die für sichtbares Licht durchlässig ist,
und
mindestens eine Antireflexschicht (5), die auf mindestens einer Seite der Platte (1) ausgebildet ist und aufweist:

- feine Partikel aus Siliciumoxid,
- ein Bindemittel, das aus einem organischen Polymermaterial hergestellt ist,
und
- feine Poren (4),

wobei das Verfahren folgende Schritte umfasst:

- Vorsehen eines Beschichtungsmaterials (2), das aus feinen Partikeln aus Siliciumoxid, einem organischen polymerisierbaren Material, das ein Bindemittel bildet, und einem Lösungsmittel zusammengesetzt ist,
und
- Verteilen des Beschichtungsmaterials (2) auf einer Platte (1), die für sichtbares Licht durchlässig ist, unter Ausbildung eines Beschichtungsfilms darauf und Trocknen,
unter Ausbildung von Mikro-Hohlräumen,

**dadurch gekennzeichnet, dass**

- feine Partikel aus Siliciumoxid verwendet werden, die auf der Oberfläche Hydroxylgruppen aufweisen,
und
- die Mikro-Hohlräume erzeugt werden durch

- Erhitzen des Beschichtungsmaterials (2) des Beschichtungsfilms zum Verdampfen des Lösungsmittels unter Ausbildung von Blasen (3) im Beschichtungsmaterial (2)
und
- Abkühlen des Beschichtungsmaterials (2) zur Aufrechterhaltung der Blasen (3) als Poren (4), welche die Mikro-Hohlräume in der resultierenden Antireflexschicht (5) bilden und eine Porengröße von 5 bis 200 nm aufweisen, wobei das Beschichtungsmaterial (5) einen elektrischen Oberflächenwiderstand von $10^{10}$ bis $10^{11}$ Ω besitzt.

16. Verfahren nach Anspruch 15, **dadurch gekennzeichnet, dass** das Erhitzen des Beschichtungsmaterials (2) zum Verdampfen des Lösungsmittels am Siedepunkt des Beschichtungsmaterials (2) oder bei einer höheren Temperatur durchgeführt wird, aber bei der Temperatur des Siedepunkts plus 150 °C oder bei einer niedrigeren Temperatur.

17. Verfahren nach Anspruch 15 oder 16, **dadurch gekennzeichnet, dass** ein Siliciumoxid mit einer mittleren Teilchengröße von ≤ 190 nm verwendet wird.

18. Verfahren nach einem der Ansprüche 15 bis 17, **dadurch gekennzeichnet, dass** eine Dicke der Antireflexschicht (5) von 60 bis 190 nm erzeugt wird.

19. Verfahren nach einem der Ansprüche 15 bis 18, **dadurch gekennzeichnet, dass** nicht-sphärische Partikel aus Siliciumoxid verwendet werden, die eine größere Achse einer Länge von ≤ 190 nm und eine kleinere Achse aufweisen, deren Länge kleiner ist als die Dicke der zu erzeugenden Antireflexschicht (5).

20. Verfahren nach einem der Ansprüche 15 bis 19, **dadurch gekennzeichnet, dass** eine Platte (1) verwendet wird, die aus Glas, einem Acrylharz oder einem PET-Harz hergestellt ist.

21. Verwendung der Verbundmaterialien, die Antireflexschichten (5) nach einem der Ansprüche 1 bis 14 aufweisen, bei der oder zur Herstellung von

- optischen Speichermedien,
- optischen Elementen, insbesondere optischen Disks,
- Flüssigkristall-Anzeigefeldern,
- Anzeigevorrichtungen, insbesondere Bildschirmen,
- optischen Speichermedien, deren Funktion auf einem unterschiedlichen Reflexionsvermögen für Licht an Aufnahmeabschnitten gegenüber Abschnitten, die keine Aufnahmeabschnitte sind, beruhen,

- Fensterscheiben,
- Glashausscheiben,
- Windschutzscheiben,
- transportablen Anzeigevorrichtungen,
- Rückspiegeln für Kraftfahrzeuge,
- Wänden für Aquarien und Terrarien,
- Solarzellenfeldern.

**Revendications**

1. Stratifié, comprenant
   une plaque (1) qui transmet une lumière visible
   et
   au moins une membrane antireflet (5) formée sur au moins un côté de la plaque (1) et comprenant

   - de fines particules d'oxyde de silicium,
   - un liant constitué d'un matériau polymère organique,

   et

   - des pores fins (4),

   **caractérisé en ce que**

   - les fines particules d'oxyde de silicium renferment des groupes hydroxyles sur la surface,
   - la taille de pore des pores fins (4) est de 5 à 200 nm,

   et

   - sla membrane antireflet (5) a une résistance électrique superficielle de $10^{10}$ à $10^{11}$ Ω.

2. Stratifié selon la revendication 1, **caractérisé en ce que** la taille moyenne des fines particules d'oxyde de silicium de la membrane antireflet (5) est ≤ 190 nm.

3. Stratifié selon la revendication 1 ou 2, **caractérisé en ce que** l'épaisseur de la membrane antireflet (5) est de 60 à 190 nm.

4. Stratifié selon l'une quelconque des revendications 1 à 3, **caractérisé en ce que** la membrane antireflet (5) a un indice de réfraction de 1.22 à 1.25.

5. Stratifié selon l'une quelconque des revendications 1 à 4, **caractérisé en ce que** les pores (4) de la membrane antireflet (5) possèdent un axe principal de 5 à 200 nm.

6. Stratifié selon la revendication 5, **caractérisé en ce que** les particules d'oxyde de silicium de la membrane antireflet (5) possèdent un axe principal ≤ 190 nm et un axe secondaire inférieur à l'épaisseur de la membrane antireflet (5).

7. Stratifié selon l'une quelconque des revendications 1 à 6, **caractérisé en ce que** le liant de la membrane antireflet (5) est constitué d'un matériau polymère organique thermoplastique ou thermodurcissable.

8. Stratifié selon l'une quelconque des revendications 1 à 7, **caractérisé en ce que** le liant de la membrane antireflet (5) est constitué d'une résine acrylique, de polystyrène, d'un copolymère acrylique/styrénique, d'une résine polyester, d'un chlorure de polyvinyle, d'un copolymère d'acétate de vinyle/d'éthylène, d'une résine de téréphtalate de polyéthylène, d'un chlorure de polyvinylidène, d'une résine de polycarbonate, d'une résine époxyde et/ ou d'une résine mélamine.

9. Stratifié selon l'une quelconque des revendications 1 à 7, **caractérisé en ce que** le liant de la membrane antireflet (5) est constitué d'un composé époxyde ou d'un prépolymère époxyde ou d'un dérivé d'acide polyamique, de préférence un acide polyamique ayant une structure aliphatique.

10. Stratifié selon l'une quelconque des revendications 1 à 9, **caractérisé en ce que** la membrane antireflet (5) présente, sur au moins un côté, une rugosité de surface moyenne arithmétique (Ra) ≤ 6 nm.

11. Stratifié selon l'une quelconque des revendications 1 à 10, **caractérisé en ce que** le liant de la membrane antireflet (5) est essentiellement composé du même matériau que celui de la plaque (1).

12. Stratifié selon l'une quelconque des revendications 1 à 11, **caractérisé en ce que** la membrane antireflet (5) ou les membranes antireflet (5) ont un indice de réfraction inférieur à la plaque (1).

13. Stratifié selon l'une quelconque des revendications 1 à 12, **caractérisé en ce que** la plaque (1) est constituée d'une résine acrylique ou d'une résine PET.

14. Stratifié selon l'une quelconque des revendications 1 à 13, **caractérisé en ce que** la membrane antireflet (5) possède un indice de réfraction de

1.22 à 1.24 quand elle est formée sur une plaque de verre, (indice de réfraction de 1.50 à 1.54)
1.22 quand elle est formée sur une plaque de résine acrylique (indice de réfraction de 1.49) et
1.25 quand elle est formée sur une plaque de résine PET (indice de réfraction de 1.56)

15. Méthode de formation de stratifiés comprenant :

une plaque (1) qui transmet une lumière visible
et
au moins une membrane antireflet (5) formée sur au moins un côté de la plaque (1) et comprenant

- de fines particules d'oxyde de silicium,
- un liant constitué d'un matériau polymère organique,
et
- des pores fins (4),

la méthode comprenant les étapes suivantes :

- fourniture d'un matériau de revêtement (2) composé de fines particules d'oxyde de silicium, d'un matériau organique polymérisable formant un liant, et d'un solvant,
et
- étalement du matériau de revêtement (2) sur une plaque (1) qui transmet une lumière visible pour former un film de revêtement dessus et séchage, avec formation de microvides,
**caractérisé en ce que**
- de fines particules d'oxyde de silicium renfermant des groupes hydroxyles sur la surface sont utilisées,
et
- les microvides sont formés par
- le chauffage du matériau de revêtement (2) du film de revêtement pour évaporer le solvant afin de former des bulles dans le matériau de revêtement (2)
et
- le refroidissement du matériau de revêtement (2) pour maintenir les bulles (3) sous forme de pores (4) formant les microvides dans la membrane antireflet résultante (5) ayant une taille de pores de 5 à 200 nm et une résistance électrique superficielle de $10^{10}$ à $10^{11}$ Ω,

16. Méthode selon la revendication 15, **caractérisée en ce que** le chauffage du matériau de revêtement (2) permettant d'évaporer le solvant est effectué au point d'ébullition du matériau de revêtement (2) ou à un point d'ébullition plus élevé, mais au point d'ébullition plus 150°C ou moins.

17. Méthode selon la revendication 15 ou 16, **caractérisée en ce qu'**un oxyde de silicium d'une taille moyenne de particule ≤ 190 nm est utilisé.

18. Méthode selon l'une quelconque des revendications 15 à 17, **caractérisée en ce que** l'épaisseur de la membrane antireflet (5) est de 60 à 190 nm.

**19.** Méthode selon l'une quelconque des revendications 15 à 18, **caractérisée en ce que** des particules d'oxyde de silicium non sphériques ayant un axe principal ≤ 190 nm et un axe secondaire inférieur à l'épaisseur de la membrane antireflet (5) devant être formée sont utilisées.

**20.** Méthode selon l'une quelconque des revendications 15 à 19, **caractérisée en ce qu'**une plaque (1) constituée de verre, d'une résine acrylique ou d'une résine PET est utilisée.

**21.** Utilisation des stratifiés comprenant des membranes antireflet (5) selon l'une quelconque des revendications 1 à 14 dans ou pour la fabrication de

- supports de stockage optiques,
- éléments optiques, notamment des disques optiques,
- panneaux d'affichage à cristaux liquides,
- dispositifs d'affichage, notamment des moniteurs,
- supports de stockage optiques basés sur un facteur de réflexion dans les parties destinées à l'enregistrement différent de celui utilisé dans les parties non destinées à l'enregistrement,
- vitres de fenêtre,
- vitres de serre,
- vitres de pare-brise,
- dispositifs d'affichage mobiles,
- rétroviseurs d'automobile,
- parois d'aquarium, d'herbarium et de terrarium,
- panneaux solaires.

# FIG.1

HEATING

HEATED CONDITION

# FIG.2

PORES

100nm

# FIG.3

115

116

100 nm

# FIG.4

REFLECTANCE (%)

MEMBRANE THICKNESS (nm)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003201443 A
- JP 7092305 A
- JP 2004083307 A
- US 6383559 B1

**Non-patent literature cited in the description**

- Industrial Science of Color. Asakura Shoten, 10 February 1984, 2
- Industrial Science of Color. Asakura Shoten, 10 February 1984, 4-8